# EUROPÄISCHE PATENTSCHRIFT

(11) **EP 1 793 300 B1**
(45) Veröffentlichungstag und Bekanntmachung des Hinweises auf die Patenterteilung: **09.01.2008**
(21) Anmeldenummer: 06023707.0
(22) Anmeldetag: 15.11.2006
(51) Int. Cl.: G05D 23/19

(54) **Garverfahren**
Cooking method
Procédé de cuisson

(30) Priorität: 30.11.2005 DE 102005057585
(43) Veröffentlichungstag der Anmeldung: 06.06.2007
(73) Patentinhaber: Miele & Cie. KG, 33332 Gütersloh (DE)
(72) Erfinder: Dittrich, Hartmut, Dr., 32257 Bünde (DE); Höhn, Rüdiger, 33120 Hiddenhausen (DE); Metz, Thomas, 32257 Bünde (DE); Porz-Illing, Elisabeth, 32278 Kirchlengern (DE)

(56) Entgegenhaltungen:
- EP-A2- 0 723 115
- EP-A2- 1 445 677
- EP-B1- 1 022 972
- FR-A- 1 370 680
- FR-A1- 2 552 628

## Beschreibung

Die Erfindung betrifft ein Garverfahren für ein Gargerät.

Aus der EP 1 022 972 B1 ist ein Garverfahren für ein als kombiniertes Dampf-/Heißluftgerät ausgebildetes Gargerät bekannt, bei dem eine elektrische Steuerung auf abgespeicherte Tabellen zugreift, um den Garprozess und insbesondere die Garraumbeheizung zu regeln. In den Tabellen sind für verschiedene Arten von Gargut die optimalen Werte der Garraumtemperatur und der Garraumfeuchte für verschiedene Garphasen in Abhängigkeit der Istkerntemperatur des Garguts und der ersten Ableitung der Istkerntemperatur nach der Zeit gespeichert. Dabei ist in der Tabelle einer bestimmten Endtemperatur und Endfeuchte im Garraum am Ende des Garprozesses eine bestimmte Länge einer Krustier- bzw. Bräunungsphase zugeordnet. Die Gargutart und eine gewünschte Sollkerntemperatur des Garguts sind von dem Benutzer in einem Vorbereitungsschritt an dem Gargerät einzugeben, damit die Parameter der Bräunungs- und Krustierphase automatisch bestimmt werden können. Nach dem Start des Garvorgangs wird die Istkerntemperatur fortlaufend gemessen und daraus eine noch verbleibende Gardauer ermittelt, die wiederum mit der berechneten Bräunungs- und Krustierdauer verglichen wird. Sofern die verbleibende Gardauer kleiner als die berechnete Bräunungs- und Krustierdauer ist, werden die Temperatur und Feuchtigkeit im Garraum unabhängig von der Istkerntemperatur anhand von abgespeicherten Tabellenwerten gesteuert. Ist die verbleibende Gardauer größer als die berechnete Bräunungs- und Krustierdauer, werden die Temperatur und die Feuchtigkeit im Garraum in Abängigkeit der Istkerntemperatur und deren erster zeitlichen Ableitung geregelt.

Die EP 0 723 115 A2 offenbart ebenfalls ein Garverfahren für ein Gargerät. Hier ist die Regelung der Garraumtemperatur in Abhängigkeit der Kerntemperatur dahingehend realisiert, dass zuerst der Garraum auf eine Temperatur TB1 eingeregelt wird und bei Erreichen eines Schwellwerts TGX für die Kerntemperatur TG auf eine lineare Regelung der Kerntemperatur umgeschaltet wird. Bedarfsweise kann noch eine Grillphase vorgeschaltet sein, bei der der Garraum auf eine im Vergleich zu TB1 höhere Garraumtemperatur TB2 eingeregelt wird.

Der Erfindung stellt sich somit das Problem ein Garverfahren für ein Gargerät anzugeben, bei dem ein gewünschter Garendzustand im Kern und an der Oberfläche eines zu behandelnden Garguts zuverlässig und reproduzierbar erreicht werden können.

Erfindungsgemäß wird dieses Problem durch ein Garverfahren mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere in der zuverlässigen und reproduzierbaren Herstellung von gewünschten und vorher eingestellten Garendzuständen im Kern und an der Oberfläche eines zu behandelnden Garguts. Durch das erfindungsgemäße Verfahren ist erreicht, dass die Garung des Kerns und der Oberfläche eines Garguts während eines Garprozesses soweit voneinander entkoppelt sind, dass die gewünschten Beschaffenheiten im Kern und an der Oberfläche für eine Vielzahl von voneinander verschiedenen Gargütern zuverlässig und reproduzierbar erreicht werden können. Dies gilt auch für Gargüter sehr unterschiedlicher Größe. Das Problem, dass während des Garprozesses durch die Garraumbeheizung eine gemeinsame Wärmebehandlung von Kern und Oberfläche erfolgt und dadurch von dem Benutzer gewünschte Garendzustände von Kern und Oberfläche schwierig zu vereinbaren sind, wird durch das erfindungsgemäße Verfahren gelöst.

Eine besonders vorteilhafte Weiterbildung des erfindungsgemäßen Verfahrens sieht vor, dass Solltemperaturen T_{Soll1} bis T_{Soll3} für die Garraumtemperatur, eine Sollkerntemperatur T_{Kern-Soll}, der Schaltwert SW und/oder die Zeitdauer t_{Bräunung} in Abhängigkeit einer mittels eines Bedienelements des Gargeräts eingestellten Gargutart und Gargutbeschaffenheit in einer Auswerteschaltung der Steuerung automatisch bestimmt und zur Regelung der Garraumtemperatur verwendet wird/werden. Hierdurch wird der Benutzer sehr entlastet und zugleich ein hochqualitatives Garergebnis erzielt. Dies gilt insbesondere für weniger geübte Benutzer.

Eine vorteilhafte Weiterbildung der vorgenannten Ausführungsform sieht vor, dass die Gargutbeschaffenheit zumindest in Abhängigkeit des gewünschten Gargrads im Kern und an der Oberfläche des Garguts gebildet ist. Auf diese Weise ist das Verfahren vereinfacht und der Bedienkomfort weiter erhöht, da der Benutzer ihm bekannte Beschreibungen, wie beispielsweise "rosa", "mittel" und "durchgebraten" für den Gargrad des Kerns und "hellbraun", "mittelbraun" und "dunkelbraun" für den Gargrad der Oberfläche des Garguts, bei den erforderlichen Einstellungen an dem Gargerät verwenden kann. Denkbar ist hierbei auch eine stufenlose Einstellung des Gargrads für den Kern und der Oberfläche des Garguts, beispielsweise anhand von als Schieberegler ausgebildeten Bedienelementen des Gargeräts.

Eine andere vorteilhafte Weiterbildung sieht vor, dass aus den im Verlauf des Garprozesses gemessenen Istkerntemperaturen T_{Kern-Ist} und der vorher festgelegten Sollkerntemperatur T_{Kern-Soll} fortlaufend eine Differenz ΔT= T_{Kern-Soll} - T_{Kern-Ist} gebildet und mit dem vorher festgelegten Schaltwert SW verglichen wird. Hierdurch ist eine besonders einfache Auswertung und Verarbeitung der gemessenen und eingestellten Kerntemperaturen des Garguts ermöglicht. Alternativ hierzu wäre es auch möglich, die erste zeitliche Ableitung der Istkerntemperatur des Garguts in der Auswerteschaltung zu ermitteln und für den Vergleich mit einem Schaltwert SW zu verwenden.

Ein Ausführungsbeispiel der Erfindung ist in den Zeichnungen rein schematisch dargestellt und wird nachfolgend näher beschrieben. Es zeigt
- Figur 1: ein Gargerät zur Durchführung des erfindungsgemäßen Verfahrens und
- Figur 2: ein Diagramm mit beispielhaften zeitlichen Verläufen der Kerntemperatur des Garguts und der Garraumtemperatur sowie der Garraumfeuchte.

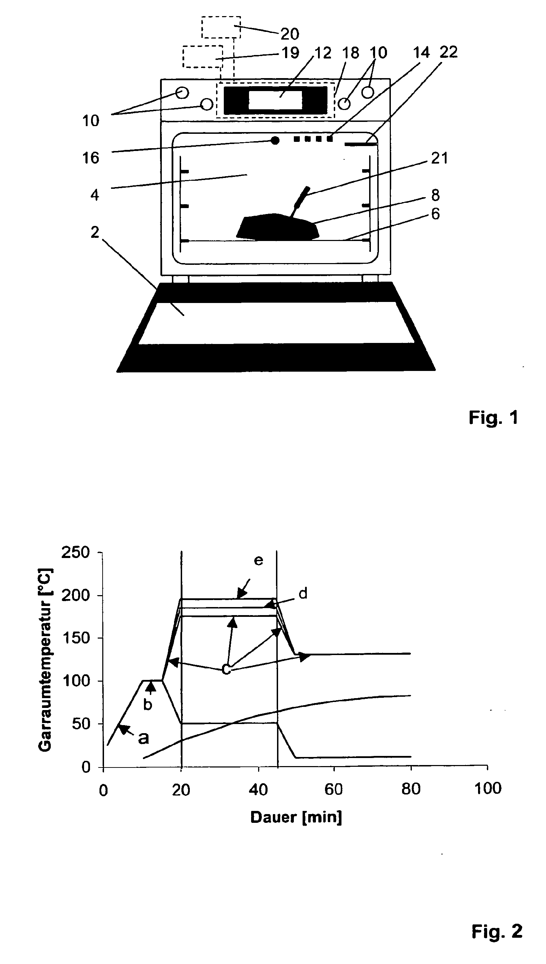

In der Fig. 1 ist ein als Herd ausgebildetes Gargerät gezeigt, das einen durch eine Backofentür 2 verschließbaren Garraum 4 aufweist. In den Garraum 4 ist ein Gargutträger 6 mit einem darauf abgelegten Gargut 8 einschiebbar. Das Gargerät weist ferner eine Bedienblende auf, an der mehrere Bedienelemente 10 und eine Anzeige 12 angeordnet sind. In dem Garraum 4 ist eine als Strahlungsheizung ausgebildete Garraumheizung 14 und ein Temperatursensor 16 zur Messung der Garraumtemperatur angeordnet. Die vorgenannten Bauteile 10, 12, 14 und 16 sind auf dem Fachmann bekannte Weise mit einer elektrischen Steuerung 18 des Gargeräts in Signalübertragungsverbindung. Die elektrische Steuerung 18 weist einen Speicher 19 und eine Auswerteschaltung 20 auf. In das Gargut 8, hier ein großes Stück Rindfleisch, ist ein als Temperaturfühler ausgebildeter Garspieß 21 zur Messung der Istkerntemperatur T_{Kern-Ist} eingesteckt. Die Signalübertragung zwischen dem Garspieß 21 und einer Sende/Empfangseinrichtung 22 der elektrischen Steuerung 18 erfolgt hier drahtlos.

Das erfindungsgemäße Verfahren wird nun anhand der Fig. 1 und 2 näher erläutert:

Der Benutzer schiebt das auf den Gargutträger 6 abgelegte Gargut 8 in den Garraum 4 ein und gibt mittels der Bedienelemente 10 und der Anzeige 12 die für den gewünschten Garprozess erforderlichen Garparameter ein. Bei dem hier vorliegenden Ausführungsbeispiel wählt der Benutzer aus einer Vielzahl von in dem Speicher 19 abgespeicherten Gargutarten das zu behandelnde Gargut 8, also ein Stück Rindfleisch, aus. Danach wählt der Benutzer an der Bedienblende die gewünschte Gargutbeschaffenheit, also den Garendzustand des Garguts 8, aus. Hierzu wählt der Benutzer mittels eines der Bedienelemente 10 und der Anzeige 12 durch drehen dieses Bedienelements 10 stufenlos den gewünschten Garendzustand im Kern des Garguts 8 in einem Bereich von "rosa" bis "gut durchgebraten" aus. In analoger Weise wählt der Benutzer dann den gewünschten Garendzustand an der Oberfläche des Garguts 8 zwischen "hellbraun" und "dunkelbraun" aus. Weitere Eingaben sind nicht erforderlich.

In der Auswerteschaltung 20 werden dann in Abhängigkeit der vorgenannten Eingaben automatisch die Garprozessparameter T_{Soll1} bis T_{Soll3} für die Garraumtemperatur, eine Sollkerntemperatur T_{Kern-Soll}, ein Schaltwert SW und eine Zeitdauer T_{Bräunung} für den bevorstehenden Garprozess bestimmt. Die vorgenannten Garprozessparameter sind für eine Vielzahl von Gargutarten und Einstellungen der Gargrade von Kern und Oberfäche durch Versuchsreihen bestimmt, in Tabellen abgespeichert und werden durch die oben genannten Eingaben des Benutzers durch die Auswerteschaltung 20 auf dem Fachmann bekannte Weise ausgewählt und von der elektrischen Steuerung 18 für den Garprozess verwendet. Die einzelnen Garprozessparameter werden nachfolgend näher erläutert.

Der Garprozess wird nun, entweder manuell oder automatisch, beispielsweise zu einem vorher festgelegten Zeitpunkt, gestartet. Der Garraum 4 wird mittels der Garraumheizung 14 bis auf T_{Soll1}, hier 100°C, aufgeheizt. Siehe auch Abschnitt a in Fig. 2. Während des gesamten Garprozesses werden mittels des Temperatursensors 16 die Garraumtemperatur und mittels des Garspießes 21 die Kerntemperatur gemessen und zur weiteren Verarbeitung, beispielsweise zur Regelung der Garraumtemperatur oder zur Anzeige der jeweiligen Temperatur auf der Anzeige 12, an die elektrische Steuerung 18 übermittelt. In dieser ersten Garphase wird nach dem Erreichen von T_{Soll1} diese Garraumtemperatur mittels der vorgenannten Regelung im Wesentlichen konstant gehalten. Siehe auch Abschnitt b in Fig. 2. Bei Garraumtemperaturen von weniger als T_{Grenz} = 135°C findet der sogenannte Maillardprozess nicht statt. Hierdurch ist erreicht, dass diese erste Garphase im Wesentlichen den Garzustand des Kerns beeinflusst, nicht aber den Bräunungsgrad der Oberfläche des Garguts 8.

Aus den während der ersten Garphase gemessenen Istkerntemperaturen und der vorher festgelegten Sollkerntemperatur T_{Kern-Soll} werden in der Auswerteschaltung 20 fortlaufend Differenztemperaturen ΔT= T_{Kern-Soll} - T_{Kern-Ist} ermittelt und mit dem vorher festgelegten Schaltwert SW verglichen. Sobald die aktuelle Differenztemperatur ΔT den Schaltwert SW erstmalig unterschreitet wird der Garraum 4 mittels der Garraumheizung 14 auf einen Wert oberhalb von T_{Grenz} aufgeheizt, hier T_{Soll2} = 170°C. Siehe auch Kurve c in Fig. 2. Diese Temperatur T_{Soll2} wird mittels der Regelung der Garraumbeheizung für eine Zeitdauer t_{Bräunung}, hier 25 min, im Wesentlichen konstant gehalten. Während sich die oben erläuterte erste Garphase, also das Garen bei einer Garraumtemperatur unterhalb von T_{Grenz}, lediglich auf den Gargrad des Kerns auswirkt und nicht auf den Bräunungsgrad der Oberfläche des Garguts 8, wirkt sich diese zweite Garphase, also das Garen bei Garraumtemperaturen oberhalb von T_{Grenz}, sowohl auf den Gargrad des Kerns wie auch auf den Gargrad und damit den Bräunungsgrad der Oberfläche des Garguts 8 aus.

Die einzelnen Garprozessparameter sind für jede einzelne Gargutart und dessen gewünschter Gargutbeschaffenheit derart aufeinander abgestimmt, dass der Zeitraum t_{Bräunung} zur Erzeugung der gewünschten Bräunung der Oberfläche des Garguts 8 auf jeden Fall nicht zu einem Übergaren des Kerns des Garguts 8 führen kann.

Nach Ablauf von t_{Bräunung} wird die Garraumtemperatur mittels der Regelung der Garraumbeheizung auf einen Wert T_{Soll3} unterhalb von T_{Grenz}, hier 125°C, abgesenkt. Diese Temperatur T_{Soll3} wird mittels der Regelung der Garraumtemperatur zumindest solange konstant gehalten, bis der gewünschte Gargrad des Kerns erreicht worden ist. Wie aus Fig. 2 deutlich hervorgeht, wird die Istkerntemperatur T_{Kern-Ist} während des gesamten Garprozesses stetig gesteigert, bis dass die Sollkerntemperatur T_{Kern-Soll}, hier 80°C, erreicht worden ist.

In Fig. 2 sind neben dem oben erläuterten Kurvenverlauf c auch noch zwei weitere beispielhafte Kurvenverläufe d und e für die Garraumtemperatur dargestellt. Eine Regelung der Garraumtemperatur gemäß dem Kurvenverlauf c würde bei dem vorgenannten Gargut 8 zu einer eher hellbraunen Oberfläche führen, während eine Regelung gemäß dem Kurvenverlauf d zu einer mittelbraunen und gemäß dem Kurvenverlauf e zu einer dunkelbraunen Oberfläche führen würde. Alternativ zu den in Fig. 2 dargestellten Regelungen der Garraumtemperatur wäre es während der zweiten Garphase denkbar, die unterschiedlichen Bräunungsgrade der Oberfläche des Garguts 8 bei gleicher Garraumtemperatur T_{Soll2} durch unterschiedlich lange Zeiträume t_{Bräunung} zu realisieren. Je länger der Zeitraum t_{Bräunung} gewählt würde, desto brauner würde die Oberfläche des Garguts 8 während der zweiten Garphase.

Zur Regelung der Garraumtemperatur sowie zur Verbesserung des Wärmeübergangs auf das Gargut 8 kann es auch vorgesehen sein, während der Aufheizphasen zusätzlich die Feuchte in dem Garraum 4 auf dem Fachmann bekannte Weise zu erhöhen. Ferner wäre hierzu auch eine zusätzliche, kontrollierte Zufuhr von Frischluft denkbar.

Abweichend von dem vorliegenden Ausführungsbeispiel wäre es auch möglich, dass der Benutzer anstelle der Gargutart und der gewünschten Gargutbeschaffenheit die einzelnen Garprozessparameter T_{Soll1} bis T_{Soll3}, T_{Kern-Soll}, SW und t_{Bräunung} an der Bedienblende manuell einstellt. Alternativ hierzu wären auch sämtliche Ausführungsformen denkbar, die zwischen diesen beiden Extremen, nämlich der weitgehenden Automatisierung und der reinen manuellen Einstellung der Garprozessparameter, liegen.

## Patentansprüche

1. Garverfahren für ein Gargerät, mit einem Garraum (4) zur Aufnahme eines Garguts (8), einer Garraumheizung (14) und einer elektrischen Steuerung (18) zur Regelung der Garraumtemperatur in Abhängigkeit der Kerntemperatur des Garguts (8), wobei das Verfahren die folgenden Verfahrensschritte umfasst:
- Einschalten der Garraumheizung (14) und Aufheizen des Garraums (4) bis auf eine vorher festgelegte Solltemperatur T_{Soll1}, wobei T_{Soll1} kleiner als T_{Grenz}= 135°C ist,
- Halten der Solltemperatur T_{Soll1} mittels der Regelung der Garraumtemperatur, bis ein vorher festgelegter und von der Istkerntemperatur T_{Kern-Ist} abhängiger Schaltwert SW erreicht ist,
- Aufheizen des Garraums (4) bis auf eine vorher festgelegte Solltemperatur T_{Soll2}, wobei T_{Soll2} größer als T_{Grenz} ist,
- Halten der Solltemperatur T_{Soll2} für eine vorher festgelegte Zeitdauer t_{Bräunung} und
- Absenken der Garraumtemperatur mittels der Steuerung (18) auf eine vorher festgelegte Solltemperatur T_{Soll3}, wobei T_{Soll3} kleiner als T_{Genz} ist.

2. Verfahren nach Anspruch 1,
**dadurch gekennzeichnet,**
**dass** aus den im Verlauf des Garprozesses gemessenen Istkerntemperaturen T_{Kern-Ist} und der vorher festgelegten Sollkerntemperatur T_{Kern-Soll} fortlaufend eine Differenz ΔT= T_{Kern-Soll} - T_{Kern-Ist} gebildet und mit dem vorher festgelegten Schaltwert SW verglichen wird.

3. Verfahren nach Anspruch 1 oder 2,
**dadurch gekennzeichnet,**
**dass** die Solltemperaturen T_{Soll1}, bis T_{Soll3,} eine Sollkerntemperatur T_{Kern-Soll} , der Schaltwert SW und/oder die Zeitdauer t_{Bräunung} in Abhängigkeit einer mittels eines Bedienelements (10) des Gargeräts eingestellten Gargutart und Gargutbeschaffenheit in einer Auswerteschaltung (20) der Steuerung (18) automatisch bestimmt und zur Regelung der Garraumtemperatur verwendet wird/werden.

4. Verfahren nach Anspruch 3,
**dadurch gekennzeichnet,**
**dass** die Gargutbeschaffenheit zumindest in Abhängigkeit des gewünschten Gargrads im Kern und an der Oberfläche des Garguts (8) gebildet ist.

## Claims

1. Cooking method for a cooking device, including a cooking chamber (4) for the accommodation of a product (8), a cooking chamber heating means (14) and an electric control means for controlling the temperature of the cooking chamber in dependence on the core temperature of the product (8), wherein the method includes the following method steps:
- switching on the cooking chamber heating means (14) and heating the cooking chamber (4) to a previously established required temperature T_{required1}, wherein T_{required1} is less than Tₗᵢₘᵢₜ = 135°C,
- holding the required temperature T_{required1} by means of controlling the temperature of the cooking chamber until a control value SW that has been established previously and is dependent on the actual core temperature T_{actual-core} is obtained,
- heating the cooking chamber (4) up to a previously established required temperature T_{required2}, wherein T_{required2}, is greater than Tₗᵢₘᵢₜ,
- holding the required temperature T_{required2} for a previously established duration t_{browning} and
- reducing the temperature of the cooking chamber by means of the control means (18) to a previously established required temperature T_{required3}, wherein T_{required3} is less than Tₗᵢₘᵢₜ.

2. Method according to claim 1, **characterised in that** a difference ΔT = T_{required-core} - T_{actual-core} is continuously formed from the actual core temperatures T_{actual-core} measured during the course of the cooking process and the previously established required core temperature T_{required-core} and is compared to the previously established control value SW.

3. Method according to claim 1 or 2, **characterised in that** the required temperatures T_{required1} to T_{required3}, a required core temperature T_{required-core}, the control value SW and/or the duration t_{browning} is / are automatically determined in dependence on a product type and product appearance set by means of a control element (10) of the cooking device in an evaluation circuit (20) of the control means (18) and is / are used for controlling the temperature of the cooking chamber.

4. Method according to claim 3, **characterised in that** the appearance of the product is formed at least in dependence on the desired degree of cooking in the core and on the surface of the product (8).

## Revendications

1. Procédé de cuisson pour un appareil de cuisson comprenant un compartiment de cuisson (4) destiné à recevoir un produit à cuire (8), un chauffage de compartiment de cuisson (14) et une commande électrique (18) pour réguler la température du compartiment de cuisson en fonction de la température à coeur du produit à cuire (8), le procédé comprenant les étapes suivantes :
- mise en marche du chauffage de compartiment de cuisson (14) et chauffage du compartiment de cuisson (4) jusqu'à une température de consigne préalablement définie t_{cons1}, T_{cons1} étant inférieure à Tₗᵢₘ = 135 °C,
- maintien de la température de consigne T_{cons1} au moyen de la régulation de la température du compartiment de cuisson jusqu'à ce qu'une valeur de commutation SW préalablement définie et dépendante de la température à coeur réelle T_{coeur_réelle} soit atteinte,
- chauffage du compartiment de cuisson (4) jusqu'à une température de consigne préalablement définie t_{cons2}, T_{cons2} étant supérieure à Tₗᵢₘ,
- maintien de la température de consigne T_{cons2} pendant une durée préalablement définie t_{brunissage} et
- abaissement de la température du compartiment de cuisson au moyen de la commande (18) à une température de consigne préalablement définie t_{cons3}, T_{cons3} étant inférieure à Tₗᵢₘ.

2. Procédé selon la revendication 1,
**caractérisé en ce**
**qu'**une différence ΔT = T_{coeur_cons}- T_{coeur_réelle} est formée en permanence à partir des températures à coeur réelles mesurées au cours du processus de cuisson et de la température à coeur de consigne préalablement définie T_{coeur_cons} et comparée avec une valeur de commutation SW préalablement définie.

3. Procédé selon la revendication 1 ou 2,
**caractérisé en ce**
**que** les températures de consigne T_{cons1} à T_{cons3}, une température à coeur de consigne T_{coeur}__{cons}, la valeur de commutation SW et/ou la durée t_{brunissage} est/sont déterminée(s) automatiquement dans un circuit d'évaluation (20) de la commande (18) en fonction d'un produit à cuire et d'une qualité du produit à cuire réglés au moyen d'un élément de commande (10) de l'appareil de cuisson et utilisée(s) pour réguler la température du compartiment de cuisson.

4. Procédé selon la revendication 3,
**caractérisé en ce**
**que** la qualité du produit à cuire est formée au moins en fonction du degré de cuisson souhaité au coeur et à la surface du produit à cuire (8).
